# EUROPEAN PATENT SPECIFICATION

(11) **EP 1 889 802 B1**
(45) Date of publication and mention of the grant of the patent: **22.02.2012**
(21) Application number: 07113829.1
(22) Date of filing: 06.08.2007
(51) Int. Cl.: B65G 47/84, B65G 29/00

(54) **Carrousel device for conveying containers**
Karussell-Vorrichtung zur Beförderung von Containern
Dispositif de carrousel pour transporter des récipients

(30) Priority: 14.08.2006 IT BO20060606
(43) Date of publication of application: 20.02.2008
(73) Proprietor: Neri S.p.A., 50031 Barberino del Mugello FI (IT)
(72) Inventor: Calamandrei, Alessandro, 51017 Pescia (IT); Bonardi, Luca, 46100 Mantova (IT)
(74) Representative: Dall'Olio, Giancarlo

(56) References cited:
- US-A- 3 934 714

## Description

The present invention relates to the technical field concerning automatic packaging machines.

In particular, the present invention relates to a carrousel device for conveying containers, aimed at being installed in an automatic packaging machine, e.g. labelling machine designed to apply a corresponding label to the containers.

In the automatic packaging machines field, there are carrousel type stations for conveying containers of different types, before or after their filling with the product to be packaged. These stations convey containers one after another toward, or in a region corresponding to, suitable work groups, aimed at performing specific operations of the packaging sequence on the same containers.

For example, the above mentioned carrousel devices are commonly used in the automatic labelling machines for conveying bottles, already filled with a product, in proximity of a device for applying labels.

A known type of carrousel conveying device includes a rotating support plate, arranged horizontal and operated by suitable motor means. The above mentioned plate carries, mounted peripherally thereon, a plurality of equidistant small plates, aimed at receiving corresponding bottles to be conveyed. The bottles are fed to the relative small plates with a time relation, by a linear conveyor, e.g. a screw conveyor, which also suitably spaces them out, so as to synchronise them with the small plates pitch.

An inlet conveyor disc, of the so-called "star" type cooperates in the correct directing of the bottles toward the small plates. The disc is mounted rotating on a vertical, axial shaft, so that its peripheral edge is substantially tangential to the circumference covered by the small plates during the support disc rotation. Equidistant seats, made along the peripheral edge of the conveyor disc, with the same pitch as the small plates pitch, are aimed at receiving the bottles fed by the screw conveyor and at placing them on a small plate.

In their turn, the small plates are mounted rotating on relative vertical stems, which pass through the support plate.

A brushless motor or a mechanism, in suitable time relation with the support disc rotation, and consequently with each small plate position, modifies the orientation of the small plate, so as to present the bottle to the label applying device in a correct labelling orientation.

An counter-acting head, hung over each small plate, has cylindrical symmetry and vertical axis, and rotates likewise in synchrony with the small plate, and is aimed at engaging the upper part of the bottle, so as to keep it in the correct label application position. The counter-action hands, idle on their axes, are supported, at bottom, by a big horizontal drum arranged axial with respect to the small plates support disc and above the latter.

The counter-acting heads are connected to a cam guide mechanism, situated inside the drum, which allows the heads to raise immediately before reaching the bottle engagement position, and to lower to engage the bottle to be labeled, as soon as it is placed on the relative small plate. The minimum and maximum height of the counter-acting heads are also made adjustable, so as to adapt them to different sizes of the bottles to be conveyed.

The labelled bottles are conveyed toward subsequent packaging stations by an outlet conveyor disc, of the so-called "star" type, which is substantially identical with the inlet one, already described, and which picks up the bottles from the corresponding small plates and places them on an outlet conveyor.

The above described carrousel conveyor is commonly used and widely tested. However, mainly in specific application fields, such as the pharmaceutical and food ones, the carrousel conveyor structure has some drawbacks, which can limit, or even prevent its use.

More specifically, the drum carrying the counter-acting heads is particularly cumbersome, it can be tainted by the product powders or remnants, and in turn, it can produce powders or other impurities, which can fall on the conveyed containers. Moreover, its raised position with respect to the packaging plane is awkward for the maintenance, it can limit or prevent the operators' total visual control of the packaging machine, and anyway, it makes the conveyor uselessly cumbersome, complicated and heavy.

Document US 3,934,714, which comprises features of the preamble of claim 1, discloses an apparatus to automatically regulate the orientation of articles having a screw thread at their mouth during transport. The apparatus comprises: a turntable disposed at one side of a conveyor for transporting articles of a constant speed and rotatable in timed relation to the conveyor; a plurality of rotary tables supported by the turntable in circumferentially equidistant arrangement and each rotatable about its axis, the rotary tables being adapted to receive the articles from the conveyor onto the rotary tables; detecting elements disposed above the rotary tables and identical in number to the number of the rotary tables, the detecting elements being adapted to revolve at a speed equal to that of the turntable, each of the detecting elements being engageable with the screw thread around the mouth portion of the article; means for operating the detecting elements to bring each of the detecting elements into elastic engagement with the screw thread around the mouth portion of the article when the article is placed on the rotary table and to disengage the element from the screw thread within a specified angle of rotation of the turntable; drive means for driving the rotary table to rotate the article about its axis upon detecting the engagement of the detecting element with the screw thread; means for stopping the rotation of the rotary table at the position where the detecting element has detected the end of the screw thread as the article rotates; and means for delivering the articles from the rotary tables onto the conveyor at a specified angle of rotation.

The object of the present invention is to propose a carrousel conveyor, which eliminates the above mentioned disadvantages, and which makes it usable in any application field.

Another object of the invention is to propose a carrousel conveyor of simplified structure, which allows to cut the production and maintenance costs.

The above mentioned objects are wholly obtained in accordance with the contents of the claims.

The characteristic features of the invention, as they will result from the claims, are pointed out in the following detailed description, with reference to the enclosed figures, in which:
- Figure 1 is a schematic, top view of a carrousel conveyor, obtained according to the present invention;
- Figure 2 is a perspective sectional view of the carrousel conveyor of Figure 1;
- Figure 3 is another perspective, partially sectional view of the carrousel conveyor of Figure 1.

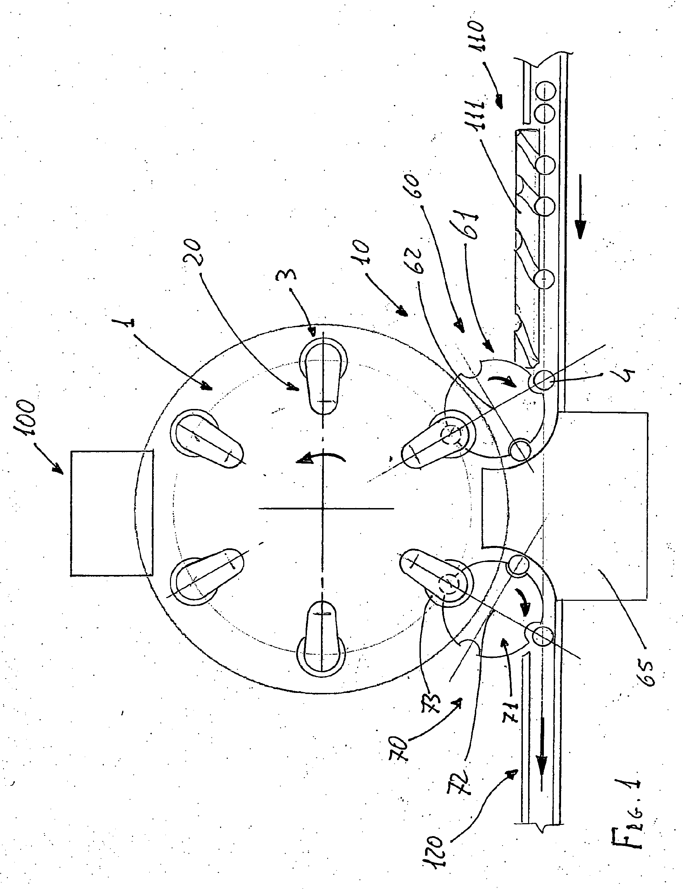

Having regard to Figure 1, reference numeral 10 indicates a carrousel device for conveying containers 4, obtained according to the present invention. The device 10 is aimed at conveying containers of any type and in any application environment, but it is particularly indicated for conveying containers to a work station 100 of an automatic packaging machine, e.g. a labelling station for bottles for pharmaceutical, food and other products.

In the following, reference will be made to this application field, as a non limiting example.

The carrousel device 10 includes a support plate 1, arranged horizontal and operated to rotate on its axis by motor means of known type, not shown.

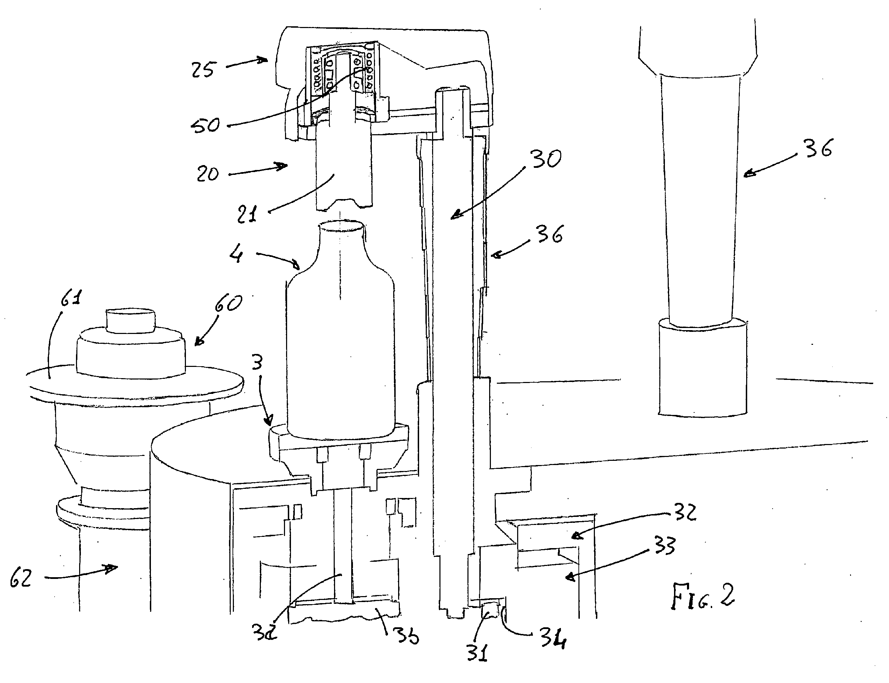

The support plate 1 has a plurality of small plates 3, arranged equally spaced around a circumference of a given diameter, which is smaller than the maximum diameter of the same plate 1. The small plates 3 are mounted on corresponding axial stems 3a (see Figure 2), which penetrate into the support plate 1 and are connected, in known way, to an actuator device 3b, aimed at defining its orientation in relation with rotation of the support plate 1. The actuator device 3b can include either a suitable gear group or a motor of brushless type, controlled by a control unit of the carrousel conveyor device 10.

The small plate 3 is aimed at receiving and carrying a corresponding container 4, resting thereon, toward a work station 100 of the packaging machine, which in the example case consists of a known group for applying labels to the above mentioned containers 4.

The containers 4 are fed one by one to the carrousel conveyor device 10 by an inlet linear conveyor 110, whose final part includes a screw conveyor 111. The latter is driven into rotation in suitable time relation with the conveyor disc and is particularly indicated to canalise the containers 4 one by one and at a mutual distance equal to the pitch between the small plates 3.

An inlet rotating star conveyor 60, interposed between the screw conveyor 111 and the support disc 1, includes a horizontal disc 61 keyed co-axially onto a corresponding vertical shaft 62 and connected to motor means of known type, which are aimed at driving the horizontal disc 61 into rotation in a direction opposite to the one of the support disc 1 rotation and in time relation with the latter.

A plurality of seats 63, made in the peripheral edge of the horizontal disc 61, have the same pitch as the small plates 3 and are aimed at engaging the containers 4 coming from the screw conveyor 111 and at conveying them until they engage with a small plate 3. A shaped guide plate 65, arranged laterally with respect to the horizontal disc 61, co-operates with the latter in the above function.

In a wholly similar way, the containers 4 at the outlet of the carrousel device 10, after their passage in a position corresponding to the work station 100, are picked up by the small plate 3 by means of an outlet rotating star conveyor 70, composed of a horizontal, counter-rotating, outlet disc 71, keyed co-axially onto its vertical shaft 72 and having seats 73, aimed at engaging the containers 4 and at carrying them toward an outlet linear conveyor 120, so as to be conveyed toward subsequent work stations of the packaging machine.

The above mentioned carrousel device 10 includes also, for each small plate 3, a corresponding stabilising head 20, situated above the small plate 3 and aimed at engaging a container 4 after it had been placed on the small plate 3, in accordance with what has been described previously, so as to stabilise its position during the transport.

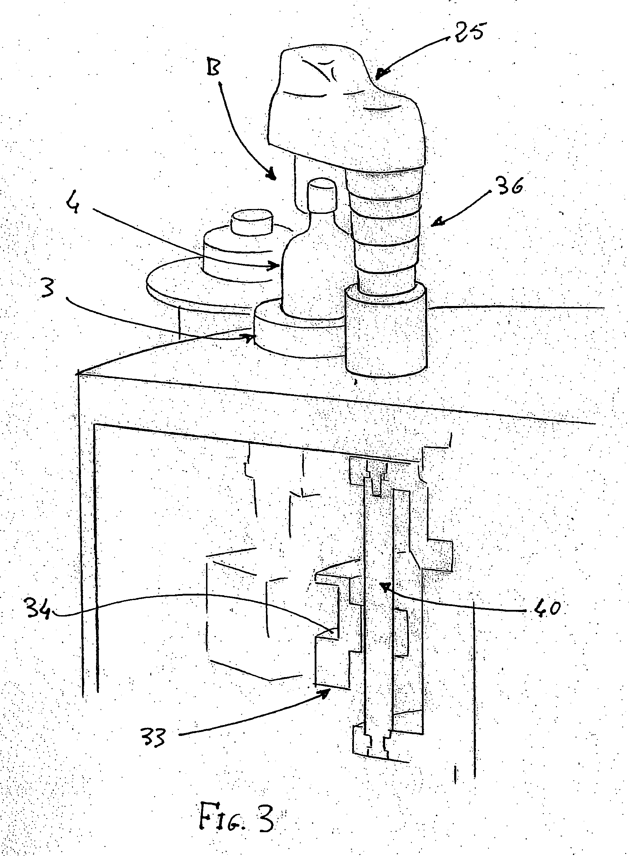

In particular, each stabilising head 20 (see also Figures 2 and 3) includes substantially a tubular element of cylindrical symmetry, which is arranged vertical and has a cavity 21, and which is aimed at being lowered onto the upper part of the container 4 and at receiving, in the cavity, the portion of the container 4 composed of its neck and cap.

The stabilising head 20 is supported by a cap 25, at an end of the lower surface thereof, with possibility of idle rotation on its axis, by means of a coupling with ball bearing.

At its other end, the cap 25 is fastened to the head of a shaft 30, arranged vertical and having its axis substantially parallel to the one of the stabilising head 20.

The shaft 30, extending from the support disc 1 and inside it, is mounted sliding thereon by means of a low friction axial guide block 5, and moves between a raised position A (Figure 2), in which the stabilising head 20 is at such a level, as not to engage the container 4, and a lowered position B (Figure 3), in which the container 4 neck and cap are contained in the cavity 21 of the stabilising head 20. The shaft 30 raising and lowering steps are defined in suitable time relation with the rotation of the support disc 1.

Guiding means 32 of the shaft 30, mechanically connected to the latter, are situated inside the support disc 1, so as to define the sliding of the shaft 30 and the level of the head 20 in the above described way.

In particular, the guiding means 32 include a cylindrical cam 33, mounted stationary axially with respect to the support disc 1 and having a close path peripheral guide cam 34. A cam follower roll 31, mounted at the base of the shaft 30, is engaged with the peripheral guide cam 34.

The cylindrical cam 33 is also mounted sliding on a plurality of stems 40, to allow the adjustment of its height, and consequently, the adjustment of the minimum and maximum height of the shaft 30. This allows to adapt the carrousel device 10 to different sizes, and in particular to different heights, of the containers 4 to be conveyed.

A telescopic spring cover 36, arranged externally to the shaft 30, is aimed at hiding the shaft from view, and at protecting the same and the operators.

The stabilising head 20 is mounted on a spring device 50, aimed at giving the latter a further axial elastic sliding, so as to soften the impact of the stabilising head 20 on the containers 4 during their engagement.

The working of the carrousel device 10 will be described in the following, beginning from an initial situation, in which a container 4, fed by the inlet conveyor 110, is engaged by the screw conveyor 111, carried by the latter in step relation with the support disc 1 rotation, and released in a position corresponding to the inlet counter-rotating star conveyor 60.

Then, the container 4 is engaged by a seat 63 of the disc 62 of the inlet star conveyor 60, and is conveyed up to a small plate 3 with the co-operation of a portion of the guide plate 65.

When the container 4 arrives onto the small plate 3, the corresponding stabilising head 20 is in the raised position A, because the cam follower roll 31 of the shaft 30 follows a lower portion of the cam 34.

In the directly subsequent step, the stabilising head is carried by the cam 34 to its lowered position B and engages the upper part of the container 4 to stabilise its position on the small plate 3. Due to the support disc 1 rotation, the container 4 is carried to the work station 100, in which for example, a label is applied thereto. The angular position of the container 4 can be changed along the path, so as to place it in best labeling position, by a suitable small plate 3 rotation, which is accompanied by a corresponding idle rotation of the stabilising head 20.

When the small plate 3 and its corresponding container 4 are brought to the outlet star conveyor 70, the container 4 is engaged by the cavity 73 of the latter. In this moment, the stabilising head 20 is brought from the cam 34 back to its raised position and disengages the container 4. Then, the latter is conveyed by the disc 71 and by a corresponding portion of the guide plate 65 toward the outlet linear conveyor 120, so as to be sent to subsequent packaging steps.

The present invention allows advantageously to make available a carrousel conveyor, whose structure is simplified, and which is less cumbersome than the traditional ones, thus having a more visible and "clean" conformation. Moreover, the present carrousel conveyor is less subjected to the outer and inner pollution, and therefore it is particularly suitable for being used for packaging pharmaceuticals, food products and in any other field, in which these features are important.

Further, the carrousel conveyor according to the invention is less expensive to produce and requires less maintenance with respect to those traditional.

It is understood that what above has been described as a mere, not limiting example.

## Claims

1. Carrousel device for conveying containers, of the type including a rotating support disc (1), which has a plurality of small plates (3) arranged peripherally and equidistant on it, said small plates (3) carrying, resting thereon, corresponding containers (4) toward a work station (100), said containers (4) being fed to said carrousel device (10) by at least one inlet conveyor (110), and being received by an outlet linear conveyor (120) after their passage in a position corresponding to said work station (100); said carrousel device (10) including, for each small plate (3), a stabilising head (20), situated above said small plate (3) and engaging with said container (4) resting on said small plate (3) to stabilise its position during transport,
**characterised in that** each stabilising head (20) is supported by a cap (25), mounted on top of a shaft (30), which extends vertically from said support disc (1), parallel to the axis of said stabilising head (20) and sliding axially to define said stabilising head (20) height in time relation with said support disc (1) rotation.
and **in that** guiding means (32) of said shaft (30), mechanically connected to the latter, are situated inside said support disc (1), so as to define axial sliding of the shaft (30),
and **in that** said guiding means (32) include a cylindrical cam (33), mounted axially with respect to said support disc (1) and having a peripheral guide cam (34), which engages a corresponding cam follower roll (31), arranged at the base of said shaft (30).

2. Carrousel device, according to claim 1, **characterised in that** said cylindrical cam (33) is mounted sliding on a plurality of stems (40), to allow adjustment of its height, and consequently, the adjustment of the minimum and maximum height of said shaft (30).

3. Carrousel device, according to claim 1, **characterised in that** it includes, for each shaft (30) a low friction axial guide block (5).

4. Carrousel device, according to claim 1, **characterised in that** a telescopic spring cover (36), arranged externally to said shaft (30), hides the shaft (30) from view, and acts as a protection therefor.

5. Carrousel device, according to claim 1, **characterised in that** the stabilising head (20) is mounted on a spring device (50), which dampens the impact of the stabilising head (20) on the containers 4.

## Patentansprüche

1. Karussell-Vorrichtung zur Beförderung von Behältern, von der Art, die eine drehende Trägerscheibe (1) beinhaltet, welche mehrere kleine Teller (3) aufweist, die an deren Umfang und in gleichem Abstand zueinander darauf angeordnet sind, wobei diese kleinen Teller (3) dazu dienen, darauf stehende entsprechende Behälter (4) zu einer Arbeitsstation (100) zu befördern, wobei diese Behälter (4) der Karussell-Vorrichtung (10) von zumindest einem Einlaufförderer (110) zugeführt werden und von einem Auslauf-Linearförderer (120) übernommen werden, nachdem sie eine der Arbeitsstation (100) entsprechende Position durchlaufen haben; wobei die Karussell-Vorrichtung (10) für jeden kleinen Teller (3) einen Stabilisierungskopf (20) beinhaltet, der über dem kleinen Teller (3) angeordnet ist und mit dem auf dem kleinen Teller (3) stehenden Behälter (4) in Eingriff tritt, um dessen Position während des Transports zu stabilisieren,
**dadurch gekennzeichnet, dass** jeder Stabilisierungskopf (20) von einer Haube (25) getragen wird, die an der Oberseite einer Welle (30) montiert ist, die sich vertikal von der Trägerscheibe (1) aus und parallel zur Achse des Stabilisierungskopfes (20) erstreckt und axial gleitend verschiebbar ist, um die Höhe des Stabilisierungskopfes (20) in zeitlicher Phasenbeziehung zur Drehung der Trägerscheibe (1) zu definieren,
und **dadurch**, dass die Führungsmittel (32) der Welle (30), die mechanisch mit der letztgenannten verbunden sind, innerhalb der Trägerscheibe (1) angeordnet sind, um das axiale Gleiten der Welle (30) zu definieren,
und **dadurch**, dass die Führungsmittel (32) eine Zylinderkurve (33) beinhalten, die im Verhältnis zur Trägerscheibe (1) axial montiert ist und an ihrem Umfang eine Führungskurve (34) aufweist, die in Eingriff mit einer entsprechenden Kurvenrolle (31) tritt, die an der Unterseite der Welle (30) angeordnet ist.

2. Karussell-Vorrichtung nach Anspruch 1, **dadurch gekennzeichnet, dass** die Zylinderkurve (33) auf mehreren Schäften (40) gleitend montiert ist, um ihre Höhenverstellung und demzufolge die Einstellung der minimalen und maximalen Höhe der Welle (30) zu ermöglichen.

3. Karussell-Vorrichtung nach Anspruch 1, **dadurch gekennzeichnet, dass** sie für jede Welle (30) einen reibungsarmen Axialführungsblock (5) beinhaltet.

4. Karussell-Vorrichtung nach Anspruch 1, **dadurch gekennzeichnet, dass** eine Teleskop-Federabdeckung (36), die außerhalb der Welle (30) angeordnet ist, die Welle (30) verbirgt und somit auch einen Schutz dafür bildet.

5. Karussell-Vorrichtung nach Anspruch 1, **dadurch gekennzeichnet, dass** der Stabilisierungskopf (20) auf einer Federvorrichtung (50) montiert ist, welche die Stoßwirkung des Stabilisierungskopfes (20) auf die Behälter (4) abdämpft.

## Revendications

1. Un dispositif de carrousel pour transporter des récipients, du type comprenant un disque de support (1) rotatif, doté d'une pluralité de petits plateaux (3) qui y sont disposés périphériquement et à équidistance les uns des autres, lesdits petits plateaux (3) transportant, en appui, des récipients (4) correspondants vers une station de travail (100), lesdits récipients (4) étant alimentés audit dispositif de carrousel (10) par au moins un transporteur d'entrée (110), et étant reçus par un transporteur linéaire de sortie (120) après leur passage dans une position correspondant à ladite station de travail (100) ; ledit dispositif de carrousel (10) comprenant, pour chaque petit plateau (3), une tête de stabilisation (20), située au-dessus dudit petit plateau (3) et venant en prise avec ledit récipient (4) reposant sur ledit petit plateau (3) pour en stabiliser la position pendant le transport,
**caractérisé en ce que** chaque tête de stabilisation (20) est supportée par une calotte (25), montée sur l'extrémité supérieure d'un arbre (30), qui s'étend verticalement à partir dudit disque de support (1), parallèle à l'axe de ladite tête de stabilisation (20) et coulissant axialement pour définir la hauteur de ladite tête de stabilisation (20) en relation de phase avec la rotation dudit disque de support (1),
et **en ce que** des moyens de guidage (32) dudit arbre (30), mécaniquement reliés à ce dernier, sont situés à l'intérieur dudit disque de support (1), de manière à définir un coulissement axial de l'arbre (30),
et **en ce que** lesdits moyens de guidage (32) comprennent une came cylindrique (33), montée axialement par rapport audit disque de support (1) et munie d'une came de guidage (34) périphérique, qui vient en prise avec un galet suiveur de came (31), disposé à la base dudit arbre (30).

2. Le dispositif de carrousel selon la revendication 1, **caractérisé en ce que** ladite came cylindrique (33) est montée de façon coulissante sur une pluralité de tiges (40), pour en permettre le réglage en hauteur et, par conséquent, le réglage de la hauteur minimum et maximum dudit arbre (30).

3. Le dispositif de carrousel selon la revendication 1, **caractérisé en ce qu'**il comprend, pour chaque arbre (30), un bloc de guidage axial (5) à bas frottement.

4. Le dispositif de carrousel selon la revendication 1, **caractérisé en ce qu'**un couvercle à ressort télescopique (36), disposé extérieurement audit arbre (30), masque l'arbre (30) à la vue, et sert de protection à celui-ci.

5. Le dispositif de carrousel selon la revendication 1, **caractérisé en ce que** la tête de stabilisation (20) est montée sur un dispositif à ressort (50), qui amortit l'impact de la tête de stabilisation (20) sur les récipients (4).
